# EUROPEAN PATENT APPLICATION

(11) **EP 1 604 955 A2**
(43) Date of publication of application: **14.12.2005**
(21) Application number: 05009664.3
(22) Date of filing: 03.05.2005
(51) Int. Cl.: C02F 5/08, A01K 63/04

(54) **A mixture of chemicals for establishing in freshwater aquariums a standard ion concentration complying with a biotope**

(30) Priority: 10.05.2004 DE 202004007648 U
(71) Applicant: Aquaristica S.r.l., 40010 Sala Bolognese (Bologna) (IT)
(72) Inventor: Horst, Kaspar, 53945 Blankenheim (DE)
(74) Representative: Fisauli, Beatrice A. M.

(57) **Abstract**

The present invention relates to a mixture of chemicals for the preparation of aquarium water which chemically corresponds to the native biotopes of ornamental fish and aquatic plants which are held in aquarium water. The mixture is composed by of 12.5 mg calcium carbonate (carbonate of lime, CaCO₃), 12.5 mg magnesium sulfate (Epsom salts - MgSO₄.7H₂O), 7.5 mg potassium chloride (KCl)) and 10.0 mg sodium carbonate (sodium bicarbonate - NaHCO₃), with a certain tolerance range as an additive per 1000 ml pure water.

## Description

In tropical freshwater aquariums normally the local tap water is employed. Conditioned by geological features or, respectively, by the increasing impairment of public water supplies by pollutants and toxic substance as a consequence of agriculture and building activities many aquarium owners utilize desalted water (pure water) from mixed bed ion exchangers, from reverse osmosis plants or filtered rain water for their aquariums. Frequently the pure water is slightly hardened by hardening chemicals (carbonate hardness builders or, respectively, overall hardness/carbonate hardness builders) .

Neither pure tap water nor hardened water can succeed in complying with the ionic composition of tropical fish and aquatic plant water in the natural native biotope. Therefore many tropical fishes cannot be held in aquariums and others cannot be bred under any circumstances. (Dr. Peter Beyer: Das Calcium (Ca²⁺) und die "Weichwasserfische": Versuch einer wissenschaftlichen Erklaerung eines bekannten aquaristischen Problems. 3- VDA-Suesswasser-Symposium "Fortpflanzung der Aquarienfische, Fulda, 7./8. November 1998).

The invention defined in claim 1 herein relates to the task of creating a chemical aqueous medium for tropical ornamental fish and aquatic plants, which emulates the native biotopes of the majority of fish and plants.

This problem is solved with the features recited in claim 1.

Numerous investigations of the inventor in tropical fish and plant waters in Sri Lanka, Thailand, Malaysia and Borneo and investigations of other authors in the relevant waters of South America and Africa constituted the basis for his trials. The topic of standard concentration was dealt with by the inventor in numerous publications, i. e. in (Fritz Gessner, Hydrobotanik, vol. II, pages 314 ff, Deutscher Verlag der Wissenschaften, Berlin 1959).

The achievement of the invention described herein is that an aqueous medium is now provided for tropical ornamental fish and aquatic plants, which they are accustomed to in their natural native biotopes. The principle or measure of this chemical composition is the ratio of the most important minerals, which has also been accepted as a standard ion concentration in limnological research (Kaspar Horst, Pflanzen im Aquarium, pages 44 ff, Verlag Eugen Ulmer, Stuttgart, 1991.)

The result of the investigations is a mixture of the most important eight minerals in a so-called standard ion concentrate with a certain tolerance range: The ratio of the ions is set as follows;

| Cations | %mval |
|---|---|
| Calcium | (Ca)44 |
| Magnesium | (Mg) 18 |
| Potassium | (K) 18 |
| Sodium | (Na)20 |
| Total | 100 |

| Anions | |
|---|---|
| Hydrogen carbonate (HCO₃) | 51 |
| Chloride (Cl) | 32 |
| Sulfate (SO₄) | 17 |
| Total | 100 |

These standard ion concentrations are produced using the following mixture of chemicals, calculated on the basis of 1000 ml pure water, packed in dissolving bags for 20 liter:
12.5 mg calcium carbonate (carbonate of lime, CaCO₃)
12.5 mg magnesium sulfate (Epsom salts - MgSO₄.7H₂O)
7.5 mg Potassium chloride (KCI)
10.0 mg sodium carbonate (sodium bicarbonate - NaHCO₃).

The basic dosage is: for every 20 liters of pure water, one chemical dissolving bag is placed in the aquarium water, preferably in a filter or filter outlet. The dissolving time varies slightly and is dependent on the free CO₂ (carbon dioxide) present in the water. CO₂ manuring as customary in aquariums is beneficial to the dissolving of the powder.

The dosage can be increased if the native biotope or habitat has higher values; as a measure either the guide value, the overall hardness or the carbonate hardness is utilized. The standard ion concentration is not affected by this.

## Claims

1. A mixture of chemicals for the preparation of aquarium water which chemically corresponds to the native biotopes of ornamental fish and aquatic plants which are held in aquarium water, **characterized by** a mixture of 12.5 mg calcium carbonate (carbonate of lime, CaCO₃), 12.5 mg magnesium sulfate (Epsom salts - MgSO₄.7H₂O), 7.5 mg potassium chloride (KCl)) and 10.0 mg sodium carbonate (sodium bicarbonate - NaHCO₃), with a certain tolerance range as an additive per 1000 ml pure water.

2. The mixture of chemicals as set forth in claim 1, **characterized in that** the pure water is water prepared by reverse osmosis, water desalted by mixed bed filter or rain water purified using a charcoal filter.

3. The mixture of chemicals as set forth in claim 1 or claim 2, **characterized in that** in combination with the added pure water there is a standard ion concentration, which with a certain tolerance range comprises the following %-mval of cations:
| | |
|---|---|
| calcium (Ca) | 44 |
| magnesium (Mg) | 18 |
| potassium (K) | 18 |
| sodium (Na) | 20. |

4. The mixture of chemicals as set forth in any one of the claims 1 through 3, **characterized in that** in combination with the added pure water there is a standard ion concentration, which with a certain tolerance range comprises the following %-mval of anions:
| | |
|---|---|
| hydrogen carbonate (HCO₃) | 51 |
| chloride (Cl) | 32 |
| sulfate (SO₄) | 17. |

5. The mixture of chemicals as set forth in any one of the claims 1 through 4, **characterized by** being packed in dissolving bags each for 20 liters of pure water.

6. The mixture of chemicals as set forth in any one of the claims 1 through 5, **characterized in that** by being packed in pervious paper bags for dissolving in quantities of water for an aquarium, either in the filter or before stocking with fish in the free water.
